Europäisches Patentamt

European Patent Office

Office européen des brevets

(11) Veröffentlichungsnummer: **0 221 461 B1**

(12) **EUROPÄISCHE PATENTSCHRIFT**

(45) Veröffentlichungstag der Patentschrift: **17.07.91**

(21) Anmeldenummer: **86114735.3**

(22) Anmeldetag: **23.10.86**

(51) Int. Cl.⁵: **C09J 127/08, C09J 133/08, C09J 131/04, C08L 27/08, C08L 33/08, C08L 31/04**

(54) **Fussbodenbelags-Kleber auf Basis wässriger Polymerdispersionen.**

(30) Priorität: **02.11.85 DE 3538983**

(43) Veröffentlichungstag der Anmeldung:
**13.05.87 Patentblatt 87/20**

(45) Bekanntmachung des Hinweises auf die
Patenterteilung:
**17.07.91 Patentblatt 91/29**

(84) Benannte Vertragsstaaten:
**AT BE CH DE FR GB IT LI NL SE**

(56) Entgegenhaltungen:
**US-A- 4 590 230**

(73) Patentinhaber: **BASF Aktiengesellschaft
Carl-Bosch-Strasse 38
W-6700 Ludwigshafen(DE)**

(72) Erfinder: **Penzel, Erich, Dr.
Carl-Bosch-Strasse 86
W-6700 Ludwigshafen(DE)**
Erfinder: **Maempel, Lothar, Dr.
Spraulache 12b
W-6835 Bruehl(DE)**
Erfinder: **Neumann, Hans J.
Am Hüttenwingert 7
W-6706 Wachenheim(DE)**
Erfinder: **Peters, Karl-Clemens, Dr.
Otto-Schmidt-Gross-Strasse 4
W-6702 Bad Dürkheim(DE)**
Erfinder: **Aydin, Oral, Dr.
Sophienstrasse 14
W-6800 Mannheim(DE)**

## Beschreibung

Die gegenwärtigen Kleber für Fußbodenbeläge bestehen aus Collophoniumharzen, z.B. Balsamharz WW, feinteiliger Kreide und Polyvinylethern, z.B. Polyvinylisobutylether eines Molekulargewichts von 2 bis 3 . $10^5$ (K-Wert nach Fikentscher 55 bis 65) als Weichmacher. Sie enthalten außerdem 20 bis 30 % ihres Gewichts organische Lösungsmittel, wie Methanol, Ethanol, Ethylacetat, Toluol, Benzin und andere Kohlenwasserstoffe. In der Regel enthalten sie Mischungen von einigen der genannten Lösungsmittel. Derartige Kleber sind weit verbreitet, da sie sich gut verarbeiten lassen, vor allem auch bei niedriger Temperatur, ein gutes Anzugsvermögen besitzen und gute Haftfestigkeiten der Verklebung geben. Von Nachteil sind die relativ hohen Mengen an organischen Lösungsmitteln. Sie bedeuten für die Bodenleger gesundheitliche Gefahren durch das Einatmen der Lösungsmitteldämpfe. Gelegentlich ist es zudem zu Explosionen mit Sach- und Personenschäden gekommen. Schließlich bedeutet die Abgabe der Lösungsmittel an die Atmosphäre eine erhebliche Umweltbelastung, wenn man die Gesamtmenge der jährlich verklebten Bodenbeläge berücksichtigt.

Umweltfreundlich sind demgegenüber wäßrige Polymer-Dispersionen als Bindemittel in Klebern für Fußbodenbeläge, die dann lösungsmittelfrei sind (s. beispielsweise US-A 4 322 330 und US-A 4 590 230).

Auf dem Markt sind bereits Polymer-Dispersionen auf unterschiedlicher Monomerenbasis, die als Bindemittel geeignet sind. Dispersionen aus Butadien und Styrol werden mit Flüssigharzen - das sind Harze mit einem Schmelzpunkt unter 20° C - geringen Mengen Weichmacher und Füllstoffen, wie Kreide und/oder Quarzmehl, konfektioniert. Nachteilig ist hier das Alterungsverhalten der Verklebungen, die im Laufe der Zeit verspröden.

Alterungsbeständig sind Bindemittel aus Acrylestern. Daraus hergestellte Kleber enthalten jedoch Harzlösungen sowie geringe Mengen Weichmacher, Kreide und/oder Quarzmehl. Sie zeichnen sich zwar durch sehr gute Haftung auf üblichen Belägen und Untergründen aus, doch ist ihr geringer Gehalt an organischen Lösungsmitteln, die mit den Harzlösungen eingebracht werden, immer noch von Nachteil.

Schließlich werden auch wäßrige Dispersionen von Copolymerisaten aus Ethylen und Vinylacetat, die mit Kohlenwasserstoff-Flüssigharzen, wie Cumaron-Indenharzen, Weichmachern und Füllstoffen formuliert sind, als Fußbodenbelags-Kleber eingesetzt. Die Kleber besitzen ein gutes Naßanzugsvermögen. Von Nachteil ist, daß man große Mengen an Harzen benötigt.

Ferner sind die Verklebungen nicht wasserfest, so daß sich die Bodenbeläge beim Shamponieren lösen können.

Es wurde nun gefunden, daß Fußbodenbelags-Kleber, die im wesentlichen aus

A. einer Dispersion eines Mischpolymerisats aus 20 bis 60 Gew.-%
Vinylidenchlorid
34 bis 80 Gew.-%
eines Gemisches aus 40 bis 80 Gewichtsteilen Estern der Acrylsäure mit 1 bis 18 C-Atome enthaltenden Alkanolen und 20 bis 60 Gewichtsteilen Vinylestern und
0,5 bis 6 Gew.-%
α,β-monoolefinisch ungesättigten 3 bis 5 C-Atome enthaltenden Mono- und/oder Dicarbonsäuren und/oder deren Amiden und/oder Vinylsulfonat,
B. 30 bis 150 Gew.-Teilen (fest), bezogen auf 100 Teile des Mischpolymerisates von A, klebrigmachenden Harzen aus der Gruppe der Collophoniumharze und deren Derivate,
C. 0 bis 50 Gew.-Teilen, bezogen auf 100 Teile Harz B, Weichmacher und/oder Flüssigharzen sowie gegebenenfalls
D. Füllstoffen

bestehen, shamponierfest sind und eine hohe Schälfestigkeit aufweisen.

Die Herstellung der wäßrigen Dispersionen ist nicht Gegenstand der Erfindung. Sie erfolgt nach den bekannten Methoden der Emulsionspolymerisation unter Verwendung der bekannten Emulgatoren und wasserlöslichen Initiatoren wie Wasserstoffperoxid oder Alkalipersulfat, vorteilhaft in Kombination mit wasserlöslichen Reduktionsmitteln, wie Formaldehydsulfoxylat, Thiosulfat, Natriumpyrosulfit oder Ascorbinsäure. Als Emulgatoren werden Alkylsulfate, Alkylsulfonate, Alkylarylsulfonate, vorzugsweise mit Ethylenoxid umgesetzte Alkylphenole und/oder deren Schwefelsäurehalbester in Mengen von 1 bis 4, vorzugsweise 1,5 bis 3,5 Gew.-% bezogen auf die Monomeren eingesetzt. Die Monomeren werden dem Reaktionsgefäß im allgemeinen als wäßrige Emulsion zugesetzt. Die Polymerisation erfolgt bei Temperaturen von 30 bis 90° C, vorzugsweise von 50 bis 70° C. Die Menge an Vinylidenchlorid beträgt 20 bis 60 Gew.-%, bezogen auf die gesamten Monomeren. Die Menge an Acrylsäureestern und Vinylestern beträgt 34 bis 80 Gew.-%. Bevorzugt werden Acrylsäureester von 1 bis 8 C-Atome enthaltenden Alkanolen. Bevorzugte Vinylester sind Vinylacetat und Vinylpropionat, geeignet sind ferner Vinylbutyrat, Vinyllaurat und Vinylpivalat. Das Mengenverhältnis Acrylsäure zu Vinylester kann im allgemeinen in den oben angegebenen Grenzen geändert werden und liegt vorzugsweise bei 50 bis 70 Gewichtsteilen der Acrylester und 30 bis 50 Gewichtsteilen der Vinylester. Als α,β-monoolefinisch ungesättigte Mono- und/oder Dicarbonsäuren werden vor allem Acrylsäure, Methacrylsäure, Crotonsäure, Itaconsäure, Maleinsäure und als deren Amide Acrylamid und Methacrylamid, Crotonsäureamid, Itaconsäuremono- und -diamid sowie Maleinsäuremono- und -diamid eingesetzt; als Vinylsulfonat kommen vor allem die Alkalisalze oder das Ammoniumsalz der Vinylsulfonsäure in Betracht. Ihr Anteil am Copolymerisat beträgt vorzugsweise 1 bis 4 Gew.-%.

Die mittlere Teilchengröße der Dispersion wird durch die Lichtdurchlässigkeit (LD-Wert) charakterisiert. Die Lichtdurchlässigkeit wird an einer auf 0,01 Gew.-% verdünnten Probe bei einer Schichtdicke von 2,5 mm bestimmt, wobei die Wellenlänge des eingestrahlten Lichtes 0,546 $\mu$m beträgt. Das Filmbildevermögen ist durch die Mindest-Filmbilde-Temperatur (MFT) gegeben. Das Copolymerisat kann durch die Glasübergangstemperatur Tg charakterisiert werden, die durch Messung im Differential Scanning Calorimeter DSC (Wendepunkt wird als Tg angenommen) erhalten wird.

Die Menge an klebrigmachenden Harzen beträgt 30 bis 150 Gew.-Teile, vorzugsweise 60 bis 100 Gewichtsteile. Die Mengenangabe bezieht sich auf 100 Gew.-Teile von Copolymerisat A (fest). Als klebrigmachendes Harz B aus der Gruppe der Collophoniumharze wird bevorzugt Balsamharz WW verwendet.

Die Menge an Weichmachern und/oder Flüssigharzen beträgt 0 bis 50 Gewichtsteile, bevorzugt 5 bis 30 Gewichtsteile. Die Mengenangabe bezieht sich auf 100 Gew.-Teile an Harz B. Als Weichmacher werden bevorzugt Polypropylenglykolalkylphenylether eingesetzt. Flüssigharze sind Harze mit einem Schmelzpunkt unter 20° C, bei denen es sich bevorzugt um Cumaron-Indenharze handelt.

Als Füllstoffe werden gegebenenfalls feingemahlene oder gefällte Kreiden und/oder Fein-Quarzmehl verwendet. Der Fußbodenbelags-Kleber kann ferner Entschäumer, z.B. auf Basis von Mineralölen oder Silikonen und Verdicker, z.B. auf Basis von (Meth)acrylsäure-(Co)polymerisaten enthalten.

Eine typische Formulierung eines Klebers für Fußbodenbeläge enthält

| | |
|---|---|
| 33 Teile | einer Dispersion eines Feststoffgehalts von 55 Gewichtsprozent |
| 35 Teile | einer 70%igen Harzlösung (in Toluol) |
| 2 Teile | handelsüblicher Weichmacher auf Basis von Polypropylenglykolalkylphenolen |
| 10 Teile | Kreide (Teilchendurchmesser 3 bis 4 $\mu$m) |
| 20 Teile | Quarzmehl (mittlerer Teilchendurchmesser 9,5 $\mu$m) |
| 5 Teile | handelsüblicher Verdicker (z.B. auf |

Basis einer 4%igen wäßrigen Lösung eines (Meth)acrylsäure-Ethylacrylat-Copolymerisates).

Nachdem die Mischung gerührt und gut gemischt wurde, läßt man sie 8 Tage stehen, dann kann man sie verarbeiten.

Der Kleber kann z.B. mit einer Zahnleiste oder mit einer Schaumstoff-Rolle auf den Untergrund aufgetragen werden. Nach dem üblichen Ablüften wird der Bodenbelag verlegt. In der Verarbeitbarkeit ähnelt der neue Kleber den lösungsmittelhaltigen Klebern. Er hat ein überraschend gutes Anzugsvermögen, das auch bei 10° C noch befriedigend ist. Überraschend sind auch die gute Shamponierfestigkeit und die hohe Alkalibeständigkeit der Verklebungen. Die Verklebungen sind zudem weichmacherfest und ihre Schälwerte sind "gut" bis "sehr gut" (Die Prüfung der Schälwerte erfolgt nach DIN 53 278 "Prüfung des Schälwiderstandes von Verklebungen mit Dispersions-Klebstoffen" nach einer Ablüftzeit von 10 Minuten).

Die in den folgenden Beispielen angegebenen Teile und Prozente beziehen sich, wenn nicht anders angegeben, auf das Gewicht. Die darin angegebenen Volumenteile verhalten sich zu den Gewichtsteilen wie das Liter zum Kilogramm.

Beispiel 1

Die Herstellung der wäßrigen Dispersion erfolgt in einem druckfesten Polymerisationskessel eines Volumens von 200 Volumenteilen, ausgerüstet mit einem Rührer, einem Zulaufkessel von 150 Volumenteilen und zwei Zulaufgefäßen von je 10 Volumenteilen.

In den Kessel werden als Vorlage eingebracht: 12,38 Teile Wasser, 0,18 Teile Kaliumperoxidisulfat und 4,47 Teile vom Zulauf I. Man heizt auf 60 bis 70° C und beginnt bei 45° C mit dem kontinuierlichen Zulaufenlassen der Zuläufe I und II, die innerhalb von 3 bis 4 Stunden zugegeben werden. Anschließend wird das Reaktionsgemisch weitere 3 Stunden auf 60° C gehalten, mit Stickstoff gespült, gekühlt, und mit 15%igem Ammoniak (Zulauf III) auf einen pH-Wert zwischen 7 und 8 gestellt.

Zulauf I ist eine wäßrige Emulsion aus 21,07 Teilen Wasser, 23,18 Teilen Vinylidenchlorid, 23,18 Teilen n-Butylacrylat, 11,59 Teilen Vinylacetat, 1,16 Teilen Acrylsäure, 0,58 Teilen Acrylamid und 1,16 Teilen einer 25%igen wäßrigen Lösung von Natriumvinylsulfonat, emulgiert mit einer Mischung aus 1,66 Teilen einer 35%igen wäßrigen Lösung des Natriumsalzes des Schwefelsäurehalbesters von mit 25 Mol Ethylenoxid umgesetztem para-Isooctylphenol und 2,02 Teilen einer wäßrigen 20%igen Lösung von mit 25 Mol Ethylenoxid umgesetztem para-Isooctylphenol. Zulauf II besteht aus einer Lösung von 0,01 Teilen Ascorbinsäure in 1,84 Teilen Wasser. Die Dispersion hat einen Feststoffgehalt von 59,5 %, ihr LD-Wert beträgt 33 %. Die MFT liegt unter 3° C, die Tg beträgt 8° C.

(a) 1,76 Teile der wäßrigen Dispersion werden mit 0,064 Teilen handelsüblichem Weichmacher auf Basis von Polypropylenglykolalkylphenolen, 0,006 Teilen handelsüblichem Entschäumer auf Basis eines Gemisches aus Mineralöl und Silikonöl, 0,8 Teilen Kreide, 0,6 Teilen Quarzmehl (mittlerer Teilchendurchmesser 9,5 μm) und 0,68 Teilen einer 70%igen Lösung von Balsamharz WW in Toluol gemischt. Die Schälfestigkeit einer mit dem Kleber hergestellten Verklebung einer Schichtdicke von ca. 1 mm von PVC auf Eternit® (die Oberflächen wurden vor dem Verkleben gründlich gereinigt) beträgt nach 10 Minuten Ablüftzeit 30,1 N/cm.

(b) Eine zweite Mischung wird mit einem höheren Anteil Harz hergestellt. Sie besteht aus einer Mischung von 1,16 Teilen Dispersion, 0,4 Teilen Kreide, 0,8 Teilen des Quarzmehls, 0,2 Teilen einer 4%igen handelsüblichen wäßrigen Verdickerlösung (Ethylacrylat(meth)acrylsäure-copolymerisat) und 1,48 Teilen einer 70%igen Lösung von Balsamharz WW in Toluol. Die Schälfestigkeit einer damit hergestellten Verklebung einer Schichtdicke von ca. 1 mm mit PVC auf Eternit® (die Oberflächen wurden vor dem Verkleben gründlich gereinigt) beträgt nach einer Ablüftzeit von 10 Minuten 24,0 N/cm.

Beispiel 2

Man arbeitet bei der Herstellung der Dispersion analog wie in Beispiel 1 angegeben: Die Vorlage enthält 13,68 Teile Wasser, 0,16 Teile Natriumperoxidisulfat, 0,13 Teile einer 40%igen Lösung des Natriumsalzes von $C_{15}$-Paraffinsulfonat und 7,04 Teile Zulauf I. Zulauf I ist eine wäßrige Emulsion aus 23,10 Teilen Wasser, 20,64 Teilen Vinylidenchlorid, 20,64 Teilen n-Butylacrylat, 10,32 Teilen Vinylpropionat, 1,03 Teilen Acrylsäure, 1,03 Teilen einer 50%igen wäßrigen Lösung von Acrylamid und 1,03 Teilen einer 25%igen wäßrigen Lösung von Natriumvinylsulfonat emulgiert mit 3,69 Teilen einer 35%igen wäßrigen Lösung des Natriumsalzes des Schwefelsäureesters von mit 25 Mol Ethylenoxid umgesetztem para-Isooctylphenol und 2,58 Teilen einer 20%igen Lösung von mit 10 Mol Ethylenoxid umgesetztem para-Isooctylphenol. Zulauf II ist eine Lösung von 0,01 Teilen Ascorbinsäure in 1,64 Teilen Wasser. Die Dispersion hat einen Feststoffgehalt von 55,5 %, ihr LD-Wert beträgt 72 %. Die MFT liegt unter 3° C, die Tg beträgt 7° C.

(a) 2,07 Teile der wäßrigen Dispersion werden mit 0,154 Teilen einer 2%igen wäßrigen Lösung eines handelsüblichen Verdickers (auf Basis eines Ethylacrylat-(meth)acrylsäure-Copolymerisats), 0,06 Teilen handelsüblichem Weichmacher (auf Basis von Polypropylenglykolalkylphenol), 0,006 Teilen handelsüblichem Entschäumer auf Basis eines Mineralöl-Silikonölgemisches, 0,8 Teilen Kreide, 1,74 Teilen Quarzmehl (mittlerer Teilchendurchmesser 9,5 μm) und 1,30 Teilen einer 70%igen Lösung von Balsamharz WW in Toluol gemischt. Die Schälfestigkeit einer damit hergestellten Verklebung einer Schichtdicke von ca. 1 mm PVC auf Eternit® - (die Oberflächen wurden vor dem Verkleben gründlich gereinigt) beträgt nach einer Ablüftzeit von 10 Minuten 21,6 N/cm.

(b) Es wird eine zweite Mischung mit höherem Anteil an Weichmacher hergestellt aus 2,18 Teilen der wäßrigen Dispersion, 0,3 Teilen der 2%igen wäßrigen Verdickerlösung, 0,63 Teilen des Weichmachers, 0,006 Teilen des Entschäumers, 0,42 Teilen Kreide, 1,56 Teilen des Quarzmehls und 0,75 Teilen der 70%igen Lösung von Balsamharz WW. Nach einer Ablüftzeit von 10 Minuten beträgt die Schälfestigkeit einer damit zwischen PVC und Eternit® (die Oberflächen wurden vor dem Verkleben gründlich gereinigt) hergestellen Verklebung einer Schichtdicke von ca 1 mm 19,7 N/cm.

Beispiel 3

Die Herstellung der Dispersion erfolgt nach der in Beispiel 1 angegebenen Fahrweise. Die Vorlage enthält 13,96 Teile Wasser, 0,16 Teile Ammoniumperoxidisulfat, 0,19 Teile einer 15%igen wäßrigen Lösung des Natriumsalzes von Dodecylbenzolsulfonat und 7,39 Teilen Zulauf I. Zulauf I ist eine wäßrige Emulsion aus 23,38 Teilen Wasser, 15,75 Teilen Vinylidenchlorid, 31,50 Teilen Vinylpropionat, 5,25 Teilen n-Butylacrylat, 1,05 Teilen Methacrylsäure, 0,53 Teilen Methacrylamid und 1,05 Teilen einer 25%igen wäßrigen Lösung von Natriumvinylsulfonat emulgiert mit 3,75 Teilen einer 35%igen wäßrigen Lösung des Natriumsalzes des Schwefelsäureesters von mit 25 Mol Ethylenoxid umgesetztem para-Isooctylphenol und 1,84 Teilen einer 20%igen wäßrigen Lösung von mit 25 Mol Ethylenoxid umgesetztem para-Isooctylphenol. Zulauf II ist eine wäßrige Lösung von 0,01 Teilen Formaldehydsulfoxylat in 1,67 Teilen Wasser. Der Feststoffgehalt der erhaltenen Dispersion beträgt 54,6 %, ihr LD-Wert 85 %. Die MFT beträgt 10° C, die Tg = 15° C.

Es wird eine Mischung hergestellt aus 1,85 Teilen der wäßrigen Dispersion, 0,064 Teilen handelsüblichem Weichmacher auf Basis von Polypropylenglykol-alkylphenolen, 0,006 Teilen handelsüblichem Entschäumer auf Basis von Mineralölen und Siliconölen, 0,8 Teilen Kreide, 0,6

Teilen Quarzmehl (mittlerer Teilchendurchmesser 9,5 μm) und 0,68 Teilen einer 70%igen Lösung von Balsamharz WW in Toluol. Die Schälfestigkeit einer damit hergestellten Verklebung einer Schichtdicke von ca. 1 mm mit PVC auf Eternit® (die Oberflächen wurden vor dem Verkleben gründlich gereinigt) beträgt nach einer Ablüftzeit von 10 Minuten 19,4 N/cm.

### Beispiel 4

Die Herstellung der Dispersion erfolgt nach der in Beispiel 1 angegebenen Fahrweise, wobei bei 45 bis 55°C polymerisiert wird. Die Vorlage enthält 13,88 Teile Wasser, 0,13 Teile einer 40%igen wäßrigen Lösung des Natriumsalzes von $C_{15}$-Paraffinsulfonat, 0,05 Teile Phosphorsäure, 0,44 Teile einer 30%igen wäßrigen Lösung von Wasserstoffperoxid und 7,12 Teile Zulauf I. Zulauf I besteht aus einer wäßrigen Emulsion aus 23,01 Teilen Wasser, 10,44 Teilen Vinylidenchlorid, 31,31 Teilen Butylacrylat, 10,44 Teilen Vinylpropionat, 1,04 Teilen Methacrylsäure, 0,52 Teilen Acrylamid und 1,04 Teilen einer 25%igen wäßrigen Lösung von Natriumvinylsulfonat emulgiert mit 3,72 Teilen einer 35%igen wäßrigen Lösung des Natriumsalzes des Schwefelsäureesters von mit 25 Mol Ethylenoxid umgesetztem para-Isooctylphenol und 1,82 Teilen einer 20%igen Lösung von mit 25 Mol Ethylenoxid umgesetztem para-Isooctylphenol. Zulauf II ist eine Lösung von 0,22 Teilen Ascorbinsäure und 0,0055 Teilen Eisen(II)sulfat in 1,90 Teilen Wasser. Der Feststoffgehalt beträgt 54,3 %, der LD-Wert 79 %. Die MFT liegt unter 1°C, die Tg beträgt -11°C.

Es wird eine Mischung hergestellt aus 1,72 Teilen der erhaltenen Dispersion, 0,064 Teilen handelsüblichem Weichmacher (auf Basis Polypropylenglykolaklylphenol),0,006 Teilen handelsüblichem Entschäumer (Gemisch aus Mineralöl und Silikonöl), 0,8 Teilen Kreide, 0,6 Teilen Quarzmehl (mittlerer Teilchendurchmesser 9,5 μm) und 0,68 Teilen einer 70%igen Lösung von Balsamharz WW in Toluol. Nach einer Ablüftzeit von 10 Minuten beträgt die Schälfestigkeit einer damit zwischen PVC und Eternit® (die Oberflächen wurden vor dem Verkleben gründlich gereinigt) hergestellten Verklebung einer Schichtdicke von ca. 1 mm 31,5 N/cm.

### Beispiel 5

Die Herstellung der Dispersion erfolgt nach der in Beispiel 1 angegebenen Fahrweise. Die Vorlage besteht aus 11,92 Teilen Wasser, 0,23 Teilen Kaliumperoxidisulfat und 7,08 Teilen Zulauf I. Zulauf I ist eine Emulsion aus 19,33 Teilen Wasser, 34,00 Teilen Vinylidenchlorid, 17,00 Teilen Vinylpropionat, 5,67 Teilen n-Butylacrylat, 1,13 Teilen Acrylsäure, 0,57 Teilen Acrylamid und 1,13 Teilen einer 25%igen wäßrigen Lösung von Natrium-Vinylsulfonat, emulgiert mit 4,05 Teilen einer 35%igen wäßrigen Lösung des Natriumsalzes des Schwefelsäureesters von mit 25 Mol Ethylenoxid umgesetztem para-Isooctylphenol und 1,98 Teilen einer 20%igen wäßrigen Lösung von mit 25 Mol Ethylenoxid umgesetztem para-Isooctylphenol. Zulauf II ist eine Lösung von 0,01 Teilen Ascorbinsäure in 2,48 Teilen Wasser.

Die erhaltene Dispersion hat einen Feststoffgehalt von 59,3 %, ihr LD-Wert beträgt 53 %. Die MFT ist 15°C, die Tg beträgt 18°C.

Aus 1,8 Teilen der Dispersion wird eine Mischung mit 0,064 Teilen handelsüblichem Weichmacher, 0,006 Teilen handelsüblichem Entschäumer, 0,8 Teilen Kreide, 0,6 Teilen Quarzmehl (mittlerer Teilchendurchmesser 9,5 μm) und 0,68 Teilen einer 70%igen Lösung von Balsamharz WW in Toluol. Nach einer Ablüftzeit von 10 Minuten beträgt die Schälfestigkeit einer mit dem Kleber zwischen PVC und Eternit® (die Oberflächen wurden vor dem Verkleben gründlich gereinigt) hergestellten ca. 1 mm dicken Verklebung 19,4 N/cm.

### Patentansprüche

1. Fußbodenbelags-Kleber, im wesentlichen bestehend aus

A. einer wäßrigen Dispersion eines Copolymerisats aus

20 bis 60 Gew.-% Vinylidenchlorid

34 bis 80 Gew.-% eines Gemisches aus 40 bis 80 Gew.-Teilen Estern der Acrylsäure mit 1 bis 18 C-Atomen enthaltenden alkanolen und 20 bis 60 Gew.-Teilen Vinylestern und

0,5 bis 6 Gew.-% $\alpha,\beta$-monoolefinisch ungesättigten 3 bis 5 C-Atome enthaltenden Mono- und/oder Dicarbonsäuren und/oder deren Amiden und/oder Vinylsulfonat

B. 30 bis 150 Gew.-Teilen (fest), bezogen auf 100 Teile des Copolymerisates von A, klebrigmachenden Harzen aus der Gruppe der Collophoniumharze und deren Derivate

C. 0 bis 50 Gew.-Teilen, bezogen auf 100 Teile Harz B, Weichmacher und/oder Flüssigharzen sowie gegebenenfalls

D. Füllstoffen.

### Claims

1. A floor covering adhesive consisting essentially of

A. an aqueous dispersion of a copolymer of

20 - 60% by weight of vinylidene chloride

34 - 80% by weight of a mixture of 40 - 80 parts by weight of an ester of acrylic acid with a $C_1$-$C_{18}$-alkanol and 20 - 60 parts by weight of a vinyl ester and

0.5 to 6% by weight of an $\alpha,\beta$-monoolefinically unsaturated $C_3$-$C_5$-mono- or dicarboxylic acid or an amide thereof or vinylsulfonate,

B. 30 - 150 parts by weight (solid), based on 100 parts of a copolymer of A, of a tackifying resin from the group of the rosins and derivatives thereof,

C. 0 - 50 parts by weight, based on 100 parts of resin B, of a plasticizer or a liquid resin and also, if desired,

D. fillers.

**Revendications**

1. Colle pour revêtement de sol constituée, en essence,

A. d'une dispersion aqueuse d'un copolymère de

20 à 60% en poids de chlorure de vinylidène

34 à 80% en poids d'un mélange de 40 à 80 parties en poids d'esters de l'acide acrylique et d'alcanols contenant de 1 à 18 atomes de carbone et de 20 60 parties en poids d'esters vinyliques et

0,5 à 6% en poids d'acides mono- et/ou dicarboxyliques contenant de 3 à 5 atomes de carbone, à insaturation $\alpha,\beta$ monooléfinique et/ou de leurs amides et/ou de sulfonate de vinyle

B. 30 à 150 parties en poids (solide), par rapport à 100 parties du copolymère de A, de résines conférant de l'adhésivité appartenant au groupe des résines de la colophane et leurs dérivés

C. 0 à 50 parties en poids, par rapport à 100 parties de la résine B, de plastifiants et/ou de résines liquides et, éventuellement,

D. des charges.